# EUROPÄISCHE PATENTSCHRIFT

(11) **EP 1 261 905 B1**
(45) Veröffentlichungstag und Bekanntmachung des Hinweises auf die Patenterteilung: **02.11.2011**
(21) Anmeldenummer: 01911232.5
(22) Anmeldetag: 06.03.2001
(51) Int. Cl.: G06F 1/14

(54) **VERFAHREN ZUM SYNCHRONISIEREN VON COMPUTERUHREN IN NETZWERKEN FÜR DIE INFORMATIONSÜBERTRAGUNG, EINRICHTUNG ZUR DURCHFÜHRUNG DIESES VERFAHRENS SOWIE FÜR DIE SYNCHRONISATION VON COMPUTERUHREN GEEIGNETES DATENPAKET**
METHOD FOR SYNCHRONIZING COMPUTER CLOCKS IN NETWORKS USED FOR INFORMATION TRANSMISSION, DEVICE FOR CARRYING OUT SAID METHOD AND DATA PACKET SUITABLE FOR THE SYNCHRONIZATION OF COMPUTER CLOCKS
PROCEDE POUR SYNCHRONISER LES HORLOGES D'ORDINATEURS DANS DES RESEAUX DESTINES A LA TRANSMISSION D'INFORMATIONS, DISPOSITIF POUR REALISER CE PROCEDE ET PAQUET DE DONNEES ADAPTEES A LA SYNCHRONISATION D'HORLOGES D'ORDINATEURS

(30) Priorität: 06.03.2000 AT 1532000
(43) Veröffentlichungstag der Anmeldung: 04.12.2002
(73) Patentinhaber: Kerö, Nikolaus, 1120 Wien (AT); Schmid, Ulrich, 1040 Wien (AT); Horauer, Martin, 1040 Wien (AT)
(72) Erfinder: Kerö, Nikolaus, 1120 Wien (AT); Schmid, Ulrich, 1040 Wien (AT); Horauer, Martin, 1040 Wien (AT)
(74) Vertreter: Haffner, Thomas M.
(86) Internationale Anmeldenummer: PCT/AT2001/000064
(87) Internationale Veröffentlichungsnummer: WO 2001/067216

(56) Entgegenhaltungen:
- WO-A-99/33207
- US-A- 5 822 317

## Beschreibung

Die Erfindung bezieht sich auf ein Verfahren zum Synchronisieren von Computeruhren in Netzwerken für die Informationsübertragung, bei welchem Informationen bei ihrer Absendung mit einem Zeitstempel ausgesandt und mit einem Zeitstempel in einer Empfangsbestätigung zurückübermittelt werden, eine Einrichtung zum Synchronisieren von Computeruhren in Netzwerken für die Informationsübertragung, bei welcher die Informationen im Moment ihrer Aussendung mit einem Zeitstempel versehen werden und im Moment des Einlangen an der Zieladresse mit einem Zeitstempel versehen werden sowie auf ein Datenpaket für die Synchronisation von Computeruhren in Informationsübertragungsnetzwerken für vernetzte Computer.

Computer benötigen für ihren Betrieb neben einem zentralen Prozessor (CPU) und einem Speicher auch Schnittstellen zur Aussenwelt, welche unterschiedlich ausgebildet sein können. Unmittelbar mit dem Computer ist ein Systembus verbunden, welcher in der Regel als parallele Schnittstelle ausgebildet ist, sodaß in Abhängigkeit vom Prozessortakt bzw. vom Bustakt eine Mehrzahl von Bits gleichzeitig ein- und ausgelesen werden können. Wenn Informationen über Leitungen übertragen werden sollen, kann dies prinzipiell auch über parallele Schnittstellen erfolgen, wobei aufgrund des hohen Lejtungsaufwandes die maximale Leitungslänge beschränkt ist. Für die Fernübertragung von Informationen bzw. von Daten wurden daher Übertragungsverfahren entwickelt, bei welchen die zunächst parallel vorliegenden Signale in serielle Signale umgewandelt wurden, sodaß sie in der Folge über eine geringere Anzahl von Leitungen gesendet und empfangen werden können. Zu diesem Zweck verfügen Computer in der Regel über Netzwerkkarten, welche an dem jeweiligen Systembus angeschlossen sind, wobei hier genormte parallele Schnittstellen vorgeschlagen wurden.

Ein Beispiel einer derartigen genormten Schnittstelle ist der sog. PCI-Bus. Mit einem derartigen Bus ist in der Folge ein Netzwerkcontroller bzw. eine Netzwerkkarte verbunden, welche neben dem Netzwerkcontroller auch noch eine weitere Schnittstelle enthält, welche dem gewählten Übertragungsmedium bzw. der gewählten Netzstruktur angepaßt ist. Diese medienspezifische Schnittstelle bzw. dieses Interface übernimmt u.a. die Anpassung der Pegel an das nachgeschaltete Leitungsnetz, wobei Busnetze sehr verbreitet sind. Bei Busnetzen sind alle Computer an eine gemeinsame Sammelleitung angeschlossen, wobei jeder Teilnehmer auf den Bus zugreifen kann und jeden dort angeschlossenen Teilnehmer erreichen kann. Um den Zugriff auf derartige Busstrukturen zu regeln, wird beispielsweise das CSMA-Verfahren verwendet (Carrier Sense Multiple Access). Bei diesem Verfahren wird versucht, Kollisionen durch gleichzeitig auftretende Sendungen zu verhindern. Wenn zwei Teilnehmer gleichzeitig ein freies Leitungsnetz erkennen und senden, würden derartige Kollisionen auftreten. Dies wird dadurch verhindert, daß die Stationen vor Übertragungsbeginn die Übertragungsmedien abhören, wofür Bit-Strukturen Verwendung finden, mit welchen eine Kollisionserkennung möglich ist. Derartige Bit-Strukturen werden als CSMA/CD-Pakete bezeichnet, wobei CD für "Collision Detection" bzw. Kollisionserkennung steht. Neben Busnetzen sind Sternnetze, Ringnetze und Token-Ringnetze gebräuchlich und es werden unterschiedliche Übetragungsprotokolle eingesetzt, mit welchen eine mehr oder minder große maximale Übertragungsgeschwindigkeit erreicht wird. Derartige Übertragungsprotokolle sind beispielsweise als Ethernetprotokoll (IEEE 803) oder als Firewireprotokoll (IEEE 1394) bekannt geworden. Analoges gilt beispielsweise für CAN, FDDI, ATM bzw. Gigabit Ethernet Protokolle.

Der Netzwerkcontroller sorgt gemeinsam mit dem medienspezifischen Interface für die Übersetzung der parallelen Datenströme in einen seriellen Datenstrom, wobei die gewünschten Konventionen bzw. Protokolle eingehalten werden, um Kollisionen zu vermeiden. Netzwerkkarten enthalten in der Regel einen Speicher, um Informationen zurückzuhalten, solange eine Datenleitung belegt ist oder das Datenpaket unvollständig bzw. in einer für das Protokoll ungeeigneten Form vorliegt. Diese gespeicherten Informationen werden in der Folge dann, wenn eine freie Leitung detektiert wird in das Netzwerk eingespeist. Bedingt durch diese Zwischenspeicherung bis zur Freigabe der Aussendung erfahren Datenpakete durch die Netzwerkkarte unterschiedliche Verzögerungen. Dies gilt auch für sogenannte Switches, in welchen für einen Adressaten bestimmte Informationen bis zu einem Zeitpunkt gespeichert werden, zu welchem ein größeres Paket mit höherer Geschwindigkeit ausgesandt werden kann.

In Computernetzwerken, in welchen sichergestellt werden muß, daß alle Computer über eine universelle Zeitbasis verfügen, ist es aber nun neben der Information, wann die Information ausgesandt wurde, auch wichtig zu erkennen, wann die Information von einem anderen vernetzten Computer empfangen wurde siehe WO99/33207. Computeruhren für die Taktung des Computers erlauben zwar den Zeitpunkt zu bestimmen, zu welchem ein Rechner eine Information an die Netzwerkkarte zur Verfügung gestellt hat, nicht aber zu erkennen, wann die Netzwerkkarte tatsächlich die Sendung über die Datenübertragungsleitung durchgeführt hat. Es sind daher zusätzliche Computeruhren vorgeschlagen worden, mit welchen den zeitkritischen Datenpaketen zu dem Zeitpunkt der tatsächlichen Sendung ein Zeitstempel aufgedrückt wird. Derartige Computeruhren wurden bereits zwischen Netzwerkcontroller und medienspezifisches Interface geschaltet, wobei der Netzwerkcontroller und das medienspezifische Interface über ein medienunabhängiges Interface (MIIF) miteinander verbunden sind und die Computeruhr zwischen diese beiden Bauteile geschaltet wird. Um nun der jeweiligen sendenden CPU eine vollständige Information über den tatsächlichen Zeitpunkt der Aussendung der Information zur Verfügung zu stellen, muß diese zwischengeschaltete Computeruhr den Zeitpunkt der tatsächlichen Aussendung an den zugeordneten Rechner rückmelden. In diesem Zusammenhang liegt es nun nahe, über eine gesonderte Baugruppe eine Rückmeldung in den Systembus vorzunehmen, wobei derartige Bauteile beispielsweise als PCI-Bridge bezeichnet werden können und mit dem PCI-Bus des Computer kommunizieren. Der schaltungstechnische und hardwaremäßige Aufwand derartiger Modifikationen ist aber relativ groß und bedingt eine zusätzliche Ausstattung von Computern mit weiteren Schnittstellen und weiteren Schnittstellenkarten.

Die Erfindung zielt nun darauf ab, den hardwaremäßigen und schaltungstechnischen Aufwand für die Synchronisation einer universellen Zeitbasis in Informationsübertragungsnetzwerken herabzusetzen und nachträglich hardwaremäßige Änderungen zu vermeiden, sodaß lediglich durch eine entsprechende Softwareanpassung die gewünschte universelle Zeitbasis mit wesentlich höherer Präzision erzielt werden kann. Zur Lösung dieser Aufgabe besteht das erfindungsgemäße Verfahren im wesentlichen darin, daß die Zeitstempel nach Freigabe der Sendung durch einen Netzwerkcontroller von einem nachgeschalteten Uhrenmodul in das ausgehende bzw. eintreffende Datenpaket eingefügt werden und daß eine CPU aus dem Vergleich von Zeitstempeln in einer Empfangsbestätigung des Adressaten der Information und dem Zeitstempel der zugehörigen gesendeten Information mit einer Kennung versehene Stellsignale für die Korrektur der Uhrenmodule generiert. Dadurch, daß die Zeitstempel nach Freigabe der Sendung durch eine Netzwerksteuerschaltung von einem Uhrenmodul eingefügt werden, können derartige Uhrenmodule innerhalb des medienunabhängigen Interfaces angeordnet werden und auch unmittelbar auf der Netzwerkkarte angeordnet werden, sodaß lediglich die entsprechende Netzwerkkarte mit dem entsprechenden Systembus des Rechners verbunden werden muß. Gleichzeitig wird durch diese Anordnung sichergestellt, daß der Zeitstempel tatsächlich erst dann eingefügt wird, wenn der Netzwerkcontroller die Sendung vornimmt. Eine Rückmeldung des korrekten Empfanges, welche gleichfalls mit einem Zeitstempel versehen ist, führt aber nun noch nicht zu einer entsprechenden aktiven Synchronisation der Taktschaltungen, da für die Zwecke der Verbesserung der Präzision und Genauigkeit der Zeitbasis Stellsignale bzw. Setupsignale sowie ggf. Kontrollsignale und/oder Statussignale mit dem Uhrenmodul ausgetauscht werden müssen. Derartige Stellsignale dürfen aber dann, wenn eine Störung der Zeitbasis durch Außeneinflüsse sicher verhindert werden soll, lediglich von der zugeordneten CPU oder einem speziellen Netzwerkrechner ausgesandt werden, wobei diese Steuersignale nur von dem jeweils angesprochenen Uhrenmodul verwertet werden dürfen. Bei der Steuerung aller Uhren durch einen einzigen Rechner im Netzwerk wird die Datenübermittlung jeder Uhr zum Steuerrechner durch eine einfache (unkommentierte) Rücksendung des Datenpaktes durch jede lokale CPU erreicht. Hiebei kann die für die Korrektur und Kontrolle einer lokalen Computeruhr durch einen anderen Computer im Netzwerk erforderliche Rückmeldung von Statusinformation durch Rücksendung aller für die lokale Computeruhr gekennzeichneten Datenpakete an den anderen Computer durch die lokale CPU erfolgen. Erfindungsgemäß ist daher vorgesehen, daß eine CPU aus dem Vergleich von Zeitstempel in einer Empfangsbestätigung des Adressaten der Information und dem Zeitstempel der eigenen gesendeten Information nun mit einer Kennung versehene Stellsignale generiert und diese ausschließlich dem Uhrenmodul zur Verfügung stellt, welches die entsprechende Korrektur vornehmen soll. Die im Rahmen derartiger Stellsignale zusätzlich erforderliche Kennung stellt somit sicher, daß der einem Computer zugeordnete Uhrenmodul selektiv angesprochen werden kann und nicht durch beliebige Signale aus dem Netzwerk selbst beeinflußt werden kann, sodaß ein hohes Maß an Sicherheit und durch die Möglichkeit einer kontinuierlichen oder iterativen Nachstellung auch eine höhere Präzision erzielbar ist.

Mit Vorteil wird das erfindungsgemäße Verfahren hiebei so durchgeführt, daß Stellsignale für die Korrektur, Kontrollsignale und/oder Statussignale der Uhrenmodule mit einer Kennung übermittelt werden, welche von einer Paketerkennungslogik eines Uhrmoduls ausgewertet wird und daß derartige mit der Kennung übermittelte Stellsignale zur Korrektur der Zeit des jeweiligen Uhrenmoduls eingesetzt werden. Prinzipiell soll, wie bereits eingangs erwähnt, ein gesonderter Busanschluß für die Rückmeldung an die zugehörige CPU aus Gründen der Vereinfachung des Hardwareaufwandes vermieden werden. Um sicherzustellen, daß die entsprechenden Stellsignale, Kontrollsignale und/oder Statussignale tatsächlich nur dem jeweils zugeordneten Uhrenmodul zugeleitet werden, ist es somit notwendig, sicherzustellen, daß die Kennungen von einem Bauteil des Uhrenmoduls selbst oder dem Netzwerkcontroller erkannt und ausgewertet werden.

Manche medienspezifische Schnittstellen lassen sich beispielsweise durch eine zusätzliche Datenleitung dahingehend schalten, daß derartige Signale nicht ins Netz, sondern an die CPU zurückgeleitet werden, welche die Signale generiert haben, wobei eine derartige Schnittstellenschaltung auch unmittelbar in einer Baugruppe verwirklicht werden kann, welche die Taktschaltung enthält. Mit Vorteil wird hiebei so vorgegangen, daß der Netzwerkcontroller unmittelbar mit einer Schnittstellenschaltung kommuniziert und einen Befehl zur Rückleitung von an die Taktschaltung ausgesandten Stell-, Kontroll- und/oder Statussignalen einer CPU an die CPU, welche die Signale generiert hat, generiert.

In diesem Zusammenhang ist es prinzipiell möglich und vorteilhaft einen speziellen Rechner für die Synchronisation einzusetzen worfür mit Vorteil so vorgegangen wird, daß die Datenpakete für die Korrektur, Kontroll- und Statussignale einer lokalen Computeruhr auf einem anderen Computer im Netzwerk berechnet und als Datenpaket an den Netzwerkcontroller der jeweiligen Computeruhr verschickt werden.

In besonders einfacher Weise kann so vorgegangen werden, daß die Synchronisation von Computeruhren in Netzwerken mit Switches erfolgt, wobei die Verweildauer jedes Datenpakets mit Korrektur, Kontroll- und Statussignalen für eine lokale Computeruhr in einem Switch gemessen wird, und jeder Switch mit einer Computeruhr und geeigneten Zeitmeßeinrichtungen an allen Switch-Ports ausgerüstet wird.

Die erfindungsgemäße Einrichtung zum Synchronisieren einer universellen Zeitbasis ist im wesentlichen **dadurch gekennzeichnet, daß** jedem Netzwerkcontroller ein Uhrenmodul zugeordnet ist, welcher eine Paketerkennungslogik und einen Uhrencontroller enthält, wobei von einer CPU ausgesandte Stell-, Kontroll- und/oder Statussignale nach Überprüfung der Zieladresse im Netzwerkcontroller vom Uhrencontroller ausgeführt bzw. verarbeitet und in das erkannte Paket Informationen eingetragen werden. Die Erkennung der mit einer Kennung versehenen Signale kann, wie bereits erwähnt, von einem Bauteil des Uhrenmoduls vorgenommen werden. Die Einrichtung kann auch so ausgebildet sein, daß der Netzwerkcontroller zum Erkennen von Stell-, Kontroll- und/oder Statusabfragesignalen über eine gesonderte Leitung unter Umgehung des Uhrenmoduls mit der Schnittstelle zur Übertragungseinrichtungsumkehr verbunden ist.

Um das Ausmaß der schaltungstechnischen Modifikation weiter zu verringern, kann aber auch auf eine derartige gesonderte Steuerleitung zwischen Netzwerkcontroller und medienspezifischem Interface verzichtet werden, wenn in dem in das medienunabhängige Interface eingeschalteten Uhrenmodul die entsprechende Logik für das Erkennen von Stell-, Kontroll- und/oder Statusabfragesignalen und eine entsprechende Schnittstelle integriert ist, welche die Rücksendung derartiger Signale an die jeweilige CPU, welche die Signale generiert hat, vornimmt. Mit Vorteil ist daher die Ausbildung so getroffen, daß die Paketerkennungslogik zum Erkennen von Stell-, Kontroll- und/oder Statusabfragesignalen und die zugehörige Computeruhr zu einer Baugruppe zusammengefaßt, insbesondere integriert ausgebildet ist. Auf diese Weise wird eine besonders einfache und in konventionelle Netzwerkkarten leicht integrierbare Schaltungsanordnung geschaffen, bei welcher es in der Folge lediglich erforderlich ist der CPU durch entsprechende Softwareprogrammierung die Möglichkeit zu bieten, die zurückkommenden Signale entsprechend auszuwerten, um die erforderlichen Setupsignale für die Nachjustierung des Uhrenmoduls zu generieren.

Das erfindungsgemäße Datenpaket für die Synchronisation von Taktschaltungen in Informationsübertragungsnetzwerken für vernetzte Computer ist zu diesem Zweck **dadurch gekennzeichnet, daß** das Datenpaket zusätzlich zu den Feldern für Zieladresse, Quelladresse und Daten wenigstens eine Kennung für Pakettypen enthält, welche für Stell-, Kontroll- und/oder Statusabfragesignale charakteristisch ist. Die üblichen Übertragungsprotokolle, wie sie in der Daten- und Kommunikationstechnik Anwendung finden, enthalten in der Regel eine definierte Anzahl von Bits für die Pakettypkennung, sodaß derartige Kennungen ohne Modifikation beispielsweise in der Bit-Struktur von CSMA-Datenpaketen mit Kollisionserkennung untergebracht werden können.

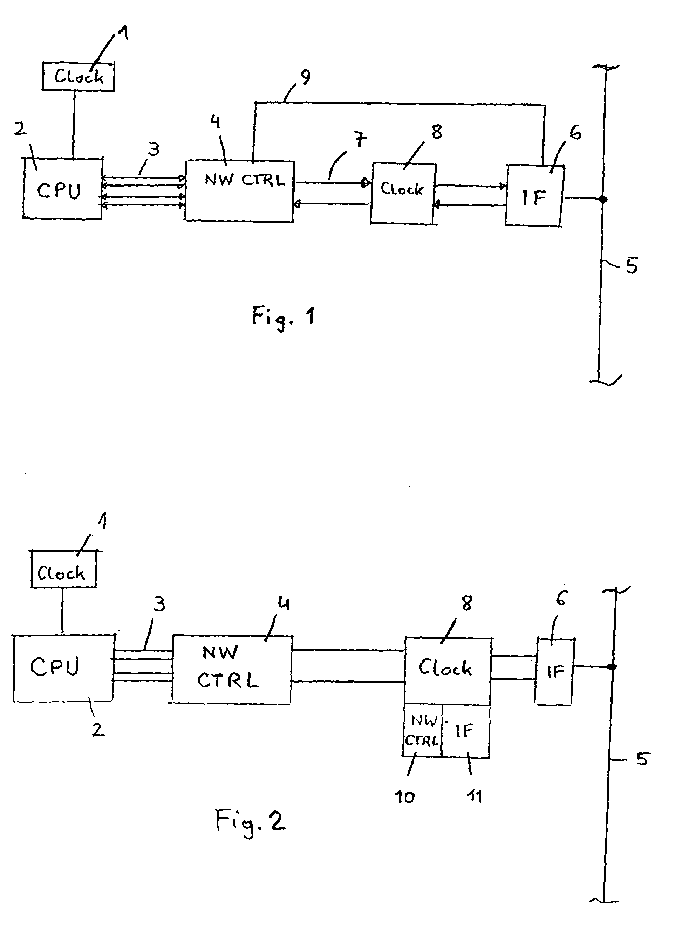

Die Erfindung wird nachfolgend anhand von in der Zeichnung schematisch dargestellten Ausführungsbeispielen näher erläutert. In dieser zeigen Fig. 1 eine erste Ausbildung der erfindungsgemäßen Einrichtung in Form eines Blockschaltbildes und Fig. 2 eine weitere Ausbildung der erfindungsgemäßen Einrichtung.

In Fig. 1 ist mit 1 ein Taktgeber für eine CPU 2 bezeichnet. Die CPU 2 stellt hiebei den zentralen Bestandteil des Rechners dar, welcher über eine als paralleler Bus ausgebildete Busstruktur 3 mit einem Netzwerkcontroller 4 einer Netzwerkkarte verbunden ist. Bei der Ausbildung nach Fig. 1 und 2 wurde eine Busstruktur als Beispiel gewählt, deren Backbone mit 5 bezeichnet ist. Die Verbindung mit diesem Backbone des Netzwerkes wird durch das medienspezifische Interface 6 hergestellt, in welchem auch die Anpassung an die vom jeweiligen Medium geforderten Pegel erfolgt. Zwischen dem medienspezifischen Interface bzw. der Schnittstelle 6 und dem Netzwerkcontroller 4 sind Leitungen 7 vorgesehen, welche insgesamt ein medienunabhängiges Interface zwischen Netzwerkcontroller 4 und dem medienspezifischen Interface 6 darstellen. In diese Leitungen 7 ist nun ein Uhrenmodul 8 eingeschaltet, welcher immer dann, wenn der Netzwerkcontroller ein Datenpaket an das medienspezifische Interface 6 weiterleitet, dem Medienpaket im Fall von zeitkritischen Informationen einen Zeitstempel einprägt. Die Rückmeldung, daß ein Signal von einer anderen CPU 2 empfangen wurde, erfolgt wiederum über die Leitung 5, das medienspezifische Interface 6, den Netzwerkcontroller 4 und dem parallelen Bus 3 an die CPU 2. Ein Vergleich der Zeitstempel des eigenen Uhrenmoduls mit dem Zeitstempel des Empfängers läßt, unter Berücksichtigung der bekannten oder gemessenen Laufzeit der Signale zwischen zwei bekannten Adressen einen Rückschluß auf die Genauigkeit der Zeitbasis zu und erlaubt es in der Folge einer CPU 2 Signale zu generieren, mit welchen die Taktfrequenz des eigenen Uhrenmoduls 8 entsprechend justiert wird, um die Genauigkeit zu erhöhen. Auf diese Weise lassen sich Synchronisierungen erzielen, bei denen die bekannte maximale Abweichung der Uhren in den Taktgeneratoren voneinander verschiedener Rechner im Nanosekundenbereich gehalten werden kann. Die entsprechenden Setup- bzw. Stellsignale werden von einer CPU 2 nun wiederum über den Netzwerkcontroller 4 an das Uhrenmodul 8 geleitet, wobei bei der Ausbildung nach Fig. 1 der Netzwerkcontroller 4 selbst in der Lage ist, derartige Setupsignale aufgrund ihrer Kennung als Setupsignale zu erkennen. In diesen Fällen teilt der Netzwerkcontroller 4 über die Leitung 9 dem medienspezifischen Interface 6 mit, daß diese Information nicht zur Weitergabe an das Netzwerk 5 gedacht ist, sondern vielmehr gemeinsam mit einer entsprechenden Bestätigung des Uhrenmoduls 8 über die erfolgte Korrektur wiederum der eigenen CPU 2 rückgeleitet werden soll.

Bei der Ausbildung nach Fig. 2 sind im wesentlichen die gleichen Bauteile in Verwendung, wobei hier auf die zusätzliche Steuerleitung 9 verzichtet wird. Das Uhrenmodul 8, mit welchem der Zeitstempel aufgeprägt wird, enthält hiebei zusätzlich eine einfache Variante eines Netzwerkcontrollers 10 in Form einer Paketerkennungslogik und eines Uhrencontrollers 11, sodaß innerhalb der dem Uhrenmodul 8 enthaltenden Baugruppe die entsprechende Erkennung von Setupsignalen erfolgen kann.

## Patentansprüche

1. Verfahren zum Synchronisieren von Computeruhren in Netzwerken für die Informationsübertragung, bei welchem Informationen bei ihrer Absendung mit einem Zeitstempel ausgesandt und mit einem Zeitstempel in einer Empfangsbestätigung zurück übermittelt werden, **dadurch gekennzeichnet, dass** die Zeitstempel nach Freigabe der Sendung durch einen Netzwerkcontroller (4, 10) von einem nachgeschalteten Uhrenmodul (8) in das ausgehende bzw. eintreffende Datenpaket eingefügt werden und dass eine CPU (2) aus dem Vergleich von Zeitstempeln in einer Empfangsbestätigung des Adressaten der Information und dem Zeitstempel der zugehörigen gesendeten Information und unter Berücksichtigung der bekannten oder gemessenen Laufzeiten der Signale zwischen dem Absender und dem Adressaten mit einer Kennung versehene Stellsignale für die Korrektur der Uhrenmodule (8) generiert.

2. Verfahren nach Anspruch 1, **dadurch gekennzeichnet, dass** Stellsignale für die Korrektur, Kontrollsignale und/oder Statussignale der Uhrenmodule (8) mit einer Kennung übermittelt werden, welche von einer Paketerkennungslogik eines Uhrmoduls (8) ausgewertet wird und dass derartige mit der Kennung übermittelte Stellsignale zur Korrektur der Zeit des jeweiligen Uhrenmoduls (8) eingesetzt werden.

3. Verfahren nach Anspruch 1 oder 2, **dadurch gekennzeichnet, dass** der Netzwerkcontroller (4) unmittelbar mit einer Schnittstellenschaltung (6) kommuniziert und einen Befehl zur lokalen Rückleitung von an das Uhrenmodul (8) ausgesandten Stell-, Kontroll- und/oder Statussignalen der CPU (2) an die CPU (2) generiert.

4. Verfahren nach Anspruch 1, 2, oder 3, **dadurch gekennzeichnet, dass** die Datenpakete für die Korrektur, Kontroll- und Statussignale einer lokalen Computeruhr (8) auf einem anderen Computer im Netzwerk berechnet und als Datenpaket an den Netzwerkcontroller (4, 10) der jeweiligen Computeruhr (8) verschickt werden.

5. Verfahren nach einem der Ansprüche 1 bis 4, **dadurch gekennzeichnet, dass** die Synchronisation von Computeruhren (8) in Netzwerken mit Switches erfolgt, wobei die Verweildauer jedes Datenpakets mit Korrektur, Kontroll- und Statussignalen für eine lokale Computeruhr (8) in einem Switch gemessen wird, und jeder Switch mit einer Computeruhr (8) und geeigneten Zeitmesseinrichtungen an allen Switch-Ports ausgerüstet wird.

6. Einrichtung zum Synchronisieren von Computeruhren in Netzwerken für die Informationsübertragung, bei welcher die Informationen im Moment ihrer Aussendung mit einem Zeitstempel versehen werden und im Moment des Einlangens an der Zieladresse mit einem Zeitstempel versehen werden, **dadurch gekennzeichnet, dass** jedem Netzwerkcontroller (4, 10) ein Uhrenmodul (8) zugeordnet ist, welcher eine Paketerkennungslogik und einen Uhrencontroller (11) enthält, wobei von einer CPU (2) ausgesandte Stell-, Kontroll- und/oder Statussignale nach Überprüfung der Zieladresse im Netzwerkcontroller (4, 10) vom Uhrencontroller (11) ausgeführt bzw. verarbeitet und in das erkannte Paket Informationen eingetragen werden.

7. Einrichtung nach Anspruch 6, **dadurch gekennzeichnet, dass** die Paketerkennungslogik zum Erkennen von Stell-, Kontroll- und/oder Statusabfragesignalen und die zugehörige Computeruhr (8) zu einer Baugruppe zusammengefasst, insbesondere integriert ausgebildet ist.

8. Datenpaket bei der Synchronisation von Computeruhren nach einem der Ansprüche 1 bis 5, **dadurch gekennzeichnet, dass** das Datenpaket zusätzlich zu den Feldern für Zieladresse, Quelladresse und Daten wenigstens eine Kennung für Pakettypen enthält, welche für Stell-, Kontroll- und/oder Statusabfragesignale charakteristisch ist.

## Claims

1. Method for synchronizing computer clocks in networks used for information transfer, in which information is sent with a time stamp at the moment of its sending and is returned with a time stamp in a receipt confirmation, **characterized in that** the time stamps, after the release of the transfer by a network controller (4,10), are inserted by a clock module (8) subsequent in the data path into the outgoing or incoming data packet and that a CPU (2) generates configuration signals being equipped with an identifier for correction of the clock modules (8) based on a comparison of time stamps in a receipt confirmation of the addressee of the information and the time stamp of the corresponding sent information and taking into account the known or measured run times of signals between the sender and the addressee.

2. Method according to claim 1, **characterized in that** the configuration signals for correction, control signals and/or status signals of the clock modules (8) are transferred with an identifier that is evaluated by a packet detection logic of a clock module (8) and that such configuration signals transferred with the identifier are used for correction of time of the respective clock module (8).

3. Method according to claim 1 or 2, **characterized in that** the network controller (4) directly communicates with an interface circuit (6) and generates a command for the local return of configuration, control and/or status signals of the CPU (2) sent to the clock module (8) back to the CPU (2).

4. Method according to claims 1, 2 or 3, **characterized in that** the data packets for the configuration, control and status signals of a local computer clock (8) are calculated on another computer in the network and are sent as a data packet to the network controller (4,10) of the respective computer clock (8).

5. Method according to anyone of claims 1 to 4, **characterized in that** the synchronization of computer clocks (8) is performed in networks having switches, the residence time of each data packet with configuration, control and status signals for a local computer clock (8) is measured in a switch, and each switch is equipped with a computer clock (8) and suitable time measurement devices at all switch ports.

6. Device for synchronizing computer clocks in networks for information transfer, in which the information is provided with a time stamp at the moment of its sending and is provided with a time stamp at the moment of its receipt at the target address, **characterized in that** a clock module (8) is assigned to each network controller (4, 10), the network controller containing a packet detection logic and a clock controller (11), wherein configuration, control and/or data signals sent by a CPU (2) are executed or processed by the clock controller (11) after the network controller (4,10) has checked the target address and information is entered into the detecting packet.

7. Device according to claim 6, **characterized in that** the packet detection logic for detecting configuration, control and/or status query signals and the corresponding computer clock (8) are combined into one component group, and in particular are formed integrated.

8. Data packet for the synchronization of computer clocks according to anyone of claims 1 to 5, **characterized in that** the data packet in addition to the fields for the target address, source address and data contains at least one identifier for packet types, that is characteristic for configuration, control and/or status query signals.

## Revendications

1. Procédé pour la synchronisation des horloges d'ordinateur dans des réseaux destinés à la transmission d'informations, où des informations sont adressées avec un horodateur lors de leur envoi et retransmises avec un horodateur dans un accusé de réception, **caractérisé en ce que** les estampilles sont ajoutées au paquet de données sortant ou entrant par un module d'horloge (8) connecté en aval après validation de l'envoi par un contrôleur de réseau (4,10), et **en ce qu'**un processeur (2) génère des signaux de réglage pourvus d'une identification pour la correction des modules d'horloge (4) à partir de la comparaison entre l'horodateur dans un accusé de réception du destinataire de l'information et l'horodateur de l'information correspondante adressée, et en tenant compte des durées d'exécution connues ou mesurées des signaux entre l'expéditeur et le destinataire.

2. Procédé selon la revendication 1, **caractérisé en ce que** des signaux de réglage pour la correction, des signaux de contrôle et/ou des signaux d'état des modules d'horloge (8) sont transmis avec une identification qui est analysée par une logique de reconnaissance de paquet d'un module d'horloge (8), et **en ce que** de tels signaux de réglage transmis avec l'identification sont utilisés pour la correction de temps du module d'horloge (8) correspondant.

3. Procédé selon la revendication 1 ou 2, **caractérisé en ce que** le contrôleur de réseau (4) communique directement avec un circuit d'interface (6) et génère une instruction pour le retour local au processeur (2) des signaux de réglage, de contrôle et/ou d'état du processeur (2) adressés au module d'horloge (8).

4. Procédé selon la revendication 1, 2, ou 3, **caractérisé en ce que** les paquets de données pour les signaux de réglage, de contrôle et/ou d'état d'une horloge d'ordinateur (8) locale sont calculés sur un autre ordinateur du réseau et expédiés comme paquet de données au contrôleur de réseau (4,10) de l'horloge d'ordinateur (8) correspondante.

5. Procédé selon l'une des revendications 1 à 4, **caractérisé en ce que** la synchronisation d'horloges d'ordinateur (8) est effectuée dans des réseaux avec des commutateurs, la temporisation de chaque paquet de données avec des signaux de réglage, de contrôle et d'état pour une horloge d'ordinateur (8) locale dans un commutateur étant mesurée, et chaque commutateur étant pourvu d'une horloge d'ordinateur (8) et de dispositifs de mesure de temps appropriés sur tous les ports de commutateur.

6. Dispositif pour la synchronisation des horloges d'ordinateur dans des réseaux destinés à la transmission d'informations, où les informations sont pourvues d'un horodateur au moment de leur envoi et pourvues d'un horodateur au moment de leur arrivée à l'adresse de destination, **caractérisé en ce qu'**à chaque contrôleur de réseau (4,10) est affecté un module d'horloge (8) contenant une logique de reconnaissance de paquet et un contrôleur horloge (11), les signaux de réglage, de contrôle et/ou d'état adressés par un processeur (2) étant exécutés ou traités après vérification de l'adresse de destination dans le contrôleur de réseau (4,10) par le contrôleur d'horloge (11), et des informations étant enregistrées dans le paquet reconnu.

7. Dispositif selon la revendication 6, **caractérisé en ce que** la logique de reconnaissance de paquet pour la détection de signaux de réglage, de contrôle et/ou de demande d'état et l'horloge d'ordinateur (8) correspondante sont regroupés dans un groupe de composants, et en particulier conçues de manière intégrée.

8. Paquet de données pour la synchronisation des horloges d'ordinateur selon l'une des revendications 1 à 5, **caractérisé en ce que** ledit paquet de données contient, en plus des champs pour l'adresse de destination, l'adresse-source et les données, au moins une identification pour des types de paquets, laquelle est caractéristique pour des signaux de réglage, de contrôle et/ou de demande d'état.
